# EUROPEAN PATENT APPLICATION

(11) **EP 2 703 673 A1**
(43) Date of publication of application: **05.03.2014**
(21) Application number: 12306028.7
(22) Date of filing: 28.08.2012
(51) Int. Cl.: F16D 23/14

(54) **Bearing for a clutch release bearing unit and clutch release bearing unit comprising such a bearing**

(71) Applicant: Aktiebolaget SKF, 41 550 Göteborg (SE)
(72) Inventor: Arnault, Benoît, 37540 SAINT CYR SUR LOIRE (FR); Baudez, Eric, 37230 FONDETTES (FR); Walter, Philippe, 37230 FONDETTES (FR)
(74) Representative: Myon, Gérard Jean-Pierre

(57) **Abstract**

This bearing (2) for a clutch release bearing unit (4) comprises an inner ring (20), an outer ring (22) and rolling elements (24) disposed between the inner ring (20) and the outer ring (22). This bearing (2) comprises a swivelling ring (26) adapted to swivel with respect to the inner and outer rings (20, 22), this swivelling ring (26) having a surface (260B) adapted to make a contact with a diaphragm spring of a clutch. The bearing (2) comprising swivelling means (260A, 22A) between the swivelling ring (26) and a first ring (22) amongst the inner and outer ring (20, 22). The bearing (2) further comprises an elastically deformable retaining element (28A) adapted to secure and fasten the swivelling ring (26), in rotation around its central axis (X26), to the first ring (22).

## Description

### TECHNICAL FIELD OF THE INVENTION

The invention relates to a bearing for a clutch release bearing unit. The invention also concerns a clutch release bearing unit comprising such a bearing.

### BACKGROUND OF THE INVENTION

Some clutches, due to specific constructions, have diaphragm spring whose longitudinal axis makes an angle with respect to the longitudinal axis of the clutch piston. Clutch bearings need to compensate this misalignment by swivelling. Such a design is known from WO-A-2010/125027. It appears that these bearings can bear swivelling, but have no damping.

It is known, from WO-A-2008/107289 to provide a specific swivelling additional ring which has an inner spherical surface, adapted to swivel with respect to one of the rings of the bearing. The additional ring optionally comprises a specific plastic material which creates some damping.

The swivelling ring must be kept on the clutch bearing for purposes of transport, handling, and assembly on car maker production lines or in garages for maintenance operations. Once assembled, the pressure made by the clutch diaphragm fingers automatically keeps the swivelling ring in place.

It is known, for example from WO-A-2008/107289, to retain the swivelling ring on the outer ring of the bearing thanks to a metallic part. This metallic part prevents the swivelling ring from moving along the longitudinal axis of the bearing, but does not prevent the swivelling ring from rotating with respect to the ring with which it is in contact. This can provoke wear on the elastic portions of the swivelling ring, before the clutch bearing is mounted in the vehicle.

### SUMMARY OF THE INVENTION

The aim of the invention is to provide a new bearing for a clutch release bearing unit, whose swivelling ring is retained in position in a more reliable way than in the prior art.

To this end, the invention concerns a bearing for a clutch release bearing unit comprising an inner ring, an outer ring and rolling elements disposed between the inner ring and the outer ring, this bearing comprising a swivelling ring adapted to swivel with respect to the outer ring, this swivelling ring having a surface adapted to make a contact with a diaphragm spring of a clutch, the bearing comprising swivelling means between the swivelling ring and a first ring amongst the inner and outer rings. This bearing is **characterized in that** it further comprises an elastically deformable retaining element adapted to secure and fasten the swivelling ring, in rotation around its central axis, to the first ring.

Thanks to the invention, the swivelling ring is retained axially and angularly, preventing relative rotation of the swivelling ring with respect to the ring with which it is in contact, and subsequent wear on some portions of the swivelling ring. Moreover, the elastically deformable elements do not disturb operation of the bearing when it is assembled, because it can follow the swivelling movements of the swivelling ring with respect to the ring with which it is in contact.

According to further aspects of the invention which are advantageous but not compulsory, such a bearing may incorporate one or several of the following features:
- The swivelling ring comprises a plastic portion having a spherical surface adapted to slide against a corresponding spherical surface provided on the first ring, said two spherical surfaces forming the swivelling means.
- A first circular end of the elastic deformable element is fixed to the first ring, and whereas a second circular end of the elastic deformable element is fixed to the swivelling ring.
- The first and second circular ends of the elastic deformable element are adapted to swivel with respect to each other.
- The elastically deformable retaining element is an elastomeric part.
- The elastomeric part comprises several concentric sections adapted to fold against each other when the elastomeric part is collapsed.
- The elastomeric part comprises a first circular end overmoulded on a first circular frame part fixed to the swivelling ring, and a second circular end overmoulded on a second circular frame part fixed to the first ring.
- The circular frame parts are made of a metallic material.
- The elastomeric part is made of rubber.
- The elastomeric part comprises a sealing lip extending from the vicinity of the ring against which the swivelling ring slides, and adapted to lay against a surface of the second ring amongst the inner and outer rings of the bearing.
- The elastically deformable retaining element is a spiral spring.
- The spiral spring is made of a metallic material.
- The spiral spring is made of a plastic material.
- The first ring is the outer ring of the bearing.

The invention also concerns a clutch release bearing unit comprising a bearing as mentioned here-above.

### BRIEF DESCRIPTION OF THE DRAWINGS

The invention will now be explained in reference to the following figures, as an illustrative example. In the annexed figures:
- figure 1 is a transversal sectional view of a clutch bearing according to a first embodiment of the invention;
- figure 2 is a view of the clutch bearing of figure 1, in a second configuration
- figure 3 is a view similar to figure 1, of a clutch bearing according to a second embodiment of the invention;
- figure 4 is a view similar to figure 2, for the clutch bearing of figure 3.

### DETAILED DESCRIPTION OF SOME EMBODIMENTS

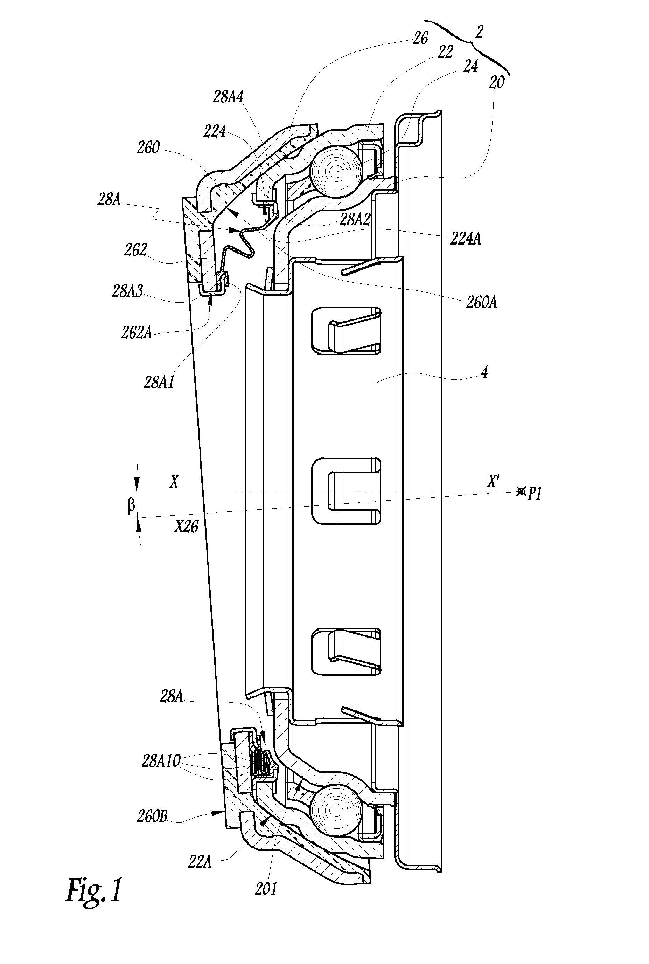

The clutch bearing 2 represented on figures 1 to 4 is adapted to be assembled to a clutch release bearing unit partially represented by an actuating sleeve 4.

Bearing 2 comprises an inner ring 20, an outer ring 22 and rolling elements, such as balls 24, mounted between inner ring 20 and outer ring 22. Outer ring 22 is rotatable with respect to inner ring 20 around a central axis X-X' of clutch bearing 2. Inner ring 20 is mounted on actuating sleeve 4.

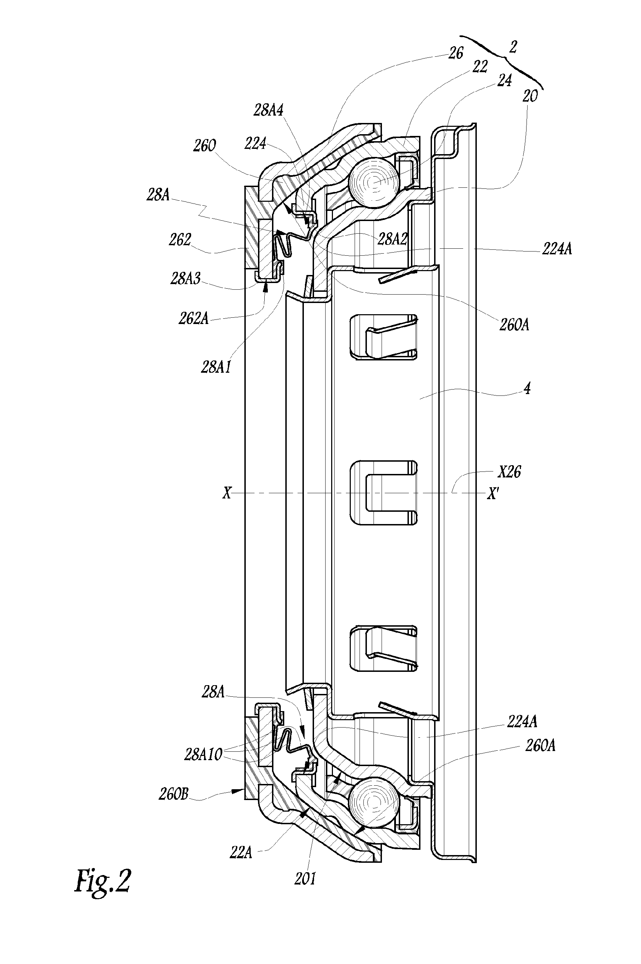

Clutch bearing 2 further comprises a swivelling ring 26, which is centered around an axis X 26. Swivelling ring 26 is adapted to swivel with respect to inner ring 20 and outer ring 22. In other words, axis X26 of swivelling ring 26 is adapted to rotate with respect to axis X-X' around the intersection point P1 of axes X26 and X-X'. In the configuration of figure 1, swivelling ring 26 is inclined with respect to inner ring 20 and outer ring 22, in such a way that axis X26 makes an angle β with respect to axis X-X'. In the configuration of figure 2, axes X-X' and X26 are superimposed.

In the configuration represented on the figures, the swivelling movement is permitted by swivelling means comprising corresponding spherical surfaces provided on swivelling ring 26 and outer ring 22. To this end, swivelling ring 26 comprises a plastic portion 260 provided on the inner side of swivelling ring with respect to axis X26. Plastic portion 260 has an inner spherical surface 260A which is concave with respect to axis X26. Spherical surface 260A is adapted to slide against a corresponding spherical surface 22A provided on outer ring 22. Spherical surface 22A extends on the outer side of outer ring 22 with respect to axis X-X' and is convex, when viewed from swivelling ring 26.

Plastic portion 260 permits to damp the swivelling movements of swivelling ring 26 with respect to outer ring 22, for example in case of vibrations occurring during operation of the clutch release bearing unit.

According to a non-shown embodiment of the invention, clutch bearing 2 may not comprise any spherical surfaces on swivelling ring 26 and outer ring 22. In such a case, the swivelling movement of swivelling ring 26 with respect to outer ring 22 is permitted by any other convenient swivelling means.

In order to retain swivelling ring 26 to outer ring 22, clutch bearing 2 comprises an elastically deformable retaining element adapted to secure and fasten swivelling ring 26 and in rotation around its central axis X26 with outer ring 22. In the first embodiment represented on figures 1 and 2, the elastic deformable element is an elastomeric part 28A. Advantageously, elastomeric part 28A is made of rubber.

Elastomeric part 28A comprises a first circular end 28A1 fixed to swivelling ring 26, and a second circular end 28A2 fixed to outer ring 22. First circular end 28A1 is overmoulded on a first circular frame part 28A3, which has substantially the shape of a ring having a U-shaped transversal section. First frame part 28A3 is fixed to a radial inner portion 262 of swivelling ring 26, which extends along a plane perpendicular to axis X26. First frame part 28A3 is mounted around an annular edge 262A of radial portion 262.

Second circular end 28A2 is overmoulded on a second circular frame part 28A4, which has substantially a ring shape, and which is fixed to an inner radially extending portion 224 of outer ring 22, which is perpendicular to axis X-X'. Second frame part 28A4 is mounted around an annular edge 224A of radial portion 224.

Between first and second circular ends 28A1 and 28A2, elastomeric part 28A comprises several concentric sections 28A10, which are adapted to fold against each other when elastomeric parts 28A is collapsed, as shown on the lower area of figure 1. The folding ability of concentric sections 28A10 allows swivelling of first circular end 28A1 with respect to second circular end 28A2. This prevents elastomeric part 28A from disturbing the swivel movements of swivelling ring 26 with respect to outer ring 22 when clutch bearing 2 operates.

Elastomeric part 28A prevents swivelling ring 26 from being separated from outer ring 22. In addition, elastomeric part 28A provides a resisting torque against a relative rotation of swivelling ring 26 with respect to outer ring 22, around axis X26, when clutch bearing 2 is being transported or handled. This prevents premature wear of plastic portion 260, which is primary provided to damp swivelling movements during operation of clutch bearing 2.

Frame part 28A3 and 28A4 are preferably made of a metallic material.

Plastic portion 260 comprises a radial portion extending against and parallely to radial portion 262 and which has an annular surface 260B adapted to make a contact with a non-shown diaphragm spring of a clutch. Surface 260B is perpendicular to axis X26.

According to a non-represented optional aspect of the invention, elastomeric part 28A may comprise a sealing lip extending from the vicinity of outer ring 22 and adapted to lay against an outer surface 201 of inner ring 20, so as to tighten the internal area comprised between inner ring 20 and outer ring 22. This optional feature can prevent external elements from getting on the interface between balls 24 and inner and outer ring rings 20 and 22 and provoke damages which can reduce the efficiency of clutch bearing 2.

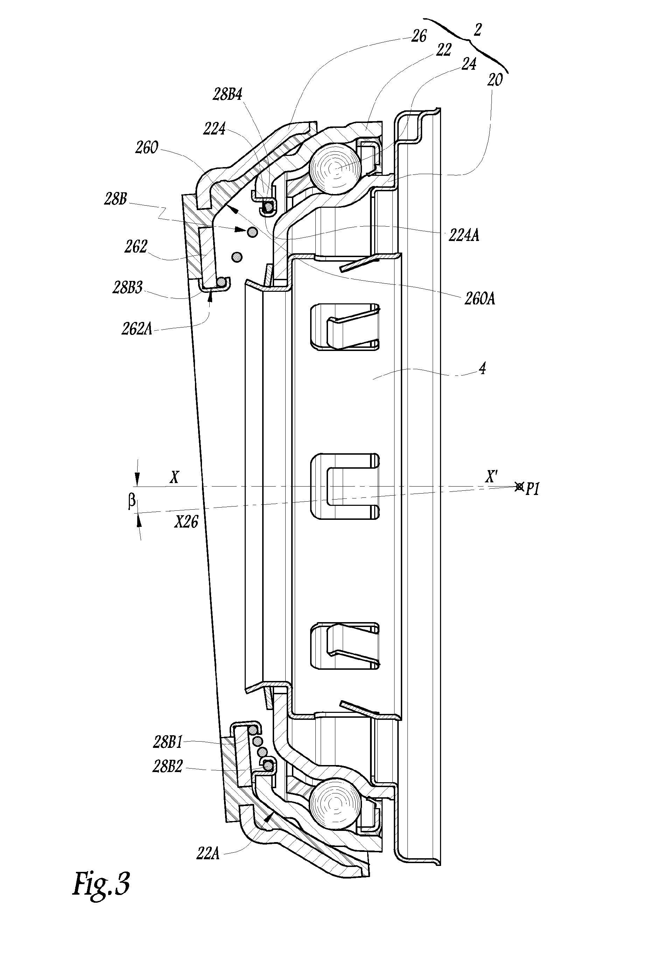

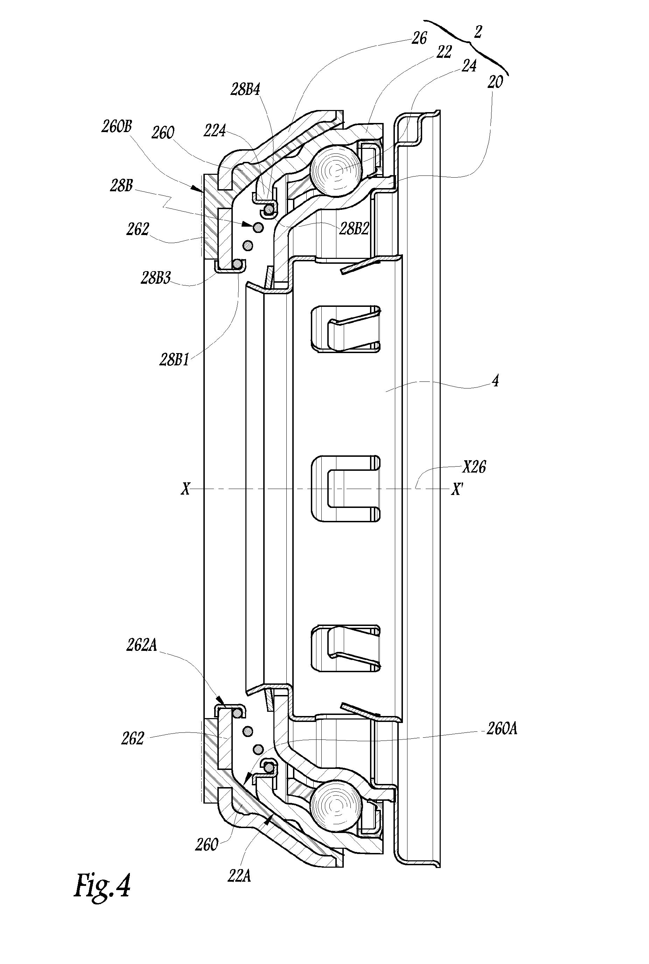

A second embodiment of the invention is represented on figures 3 and 4. In this embodiment, elements similar to the first embodiment have the same references and work in the same way. Only the differences from the first embodiment are described here-after.

In this embodiment, the elastically deformable retaining element is a spiral spring 28B which has a first end turn 28B1 fixed to swivelling ring 26, and a second end turn 28B2 fixed to outer ring 22. First end turn 28B1 is fixed at the end of radial portion 262 of swivelling ring 26 thanks to a metallic retaining element 28B3. In a similar way, second end turn 28B2 is fixed to radial portion 224 thanks to a metallic retaining element 28B4.

Advantageously, spiral spring 28B is made of a metallic material. As an alternative embodiment, spiral spring 28B is made of a plastic material.

Retaining elements 28B3 and 28B4 can be made of a metallic or plastic material.

According to a non-shown embodiment of the invention, swivelling ring 26 may be adapted to slide against inner ring 20 instead of sliding against outer ring 22. In such a case, inner ring 20 comprises a spherical surface corresponding to spherical surface 260A, and the second circular end 28A2 or the second end turn 28B2 of elastomeric part 28A or spiral spring 28B is fixed to inner ring 20.

The features of the above-described embodiments can be combined within the scope of the invention.

## Claims

1. A bearing (2) for a clutch release bearing unit (4) comprising an inner ring (20), an outer ring (22) and rolling elements (24) disposed between the inner ring (20) and the outer ring (22), this bearing comprising a swivelling ring (26) adapted to swivel with respect to the inner and outer rings (20, 22), this swivelling ring (26) having a surface (260B) adapted to make a contact with a diaphragm spring of a clutch, the bearing (2) comprising swivelling means (260A, 22A) between the swivelling ring (26) and a first ring (22) amongst the inner and outer ring (20, 22), wherein the bearing (2) further comprises an elastically deformable retaining element (28A ; 28B) adapted to secure and fasten the swivelling ring (26), in rotation around its central axis (X26), to the first ring (22).

2. Bearing according to claim 1, wherein the swivelling ring (26) comprising a plastic portion (260) having a spherical surface (260A) adapted to slide against a corresponding spherical surface (22A) provided on the first ring (22), said two spherical surfaces (260A, 22A) forming the swivelling means.

3. Bearing according to one of claims 1 and 2, wherein a first circular end (28A1 ; 28B1) of the elastic deformable element (28A ; 28B) is fixed to the first ring (22), and wherein a second circular end (28A2 ; 28B2) of the elastic deformable element (28A ; 28B) is fixed to the swivelling ring (26).

4. Bearing according to claim 3, wherein the first (28A1 ; 28B1) and second (28A2 ; 28B2) circular ends of the elastic deformable element (28A ; 28B) are adapted to swivel with respect to each other.

5. Bearing according to one of the previous claims, wherein the elastically deformable retaining element is an elastomeric part (28A).

6. Bearing according to claim 5, wherein the elastomeric part (28A) comprises several concentric sections (28A10) adapted to fold against each other when the elastomeric part (28A) is collapsed.

7. Bearing according to one of claims 5 and 6, wherein the elastomeric part (28A) comprises a first circular end (28A1) overmoulded on a first circular frame part (28A3) fixed to the swivelling ring (26), and a second circular end (28A2) overmoulded on a second circular frame part (28A4) fixed to the first ring (22).

8. Bearing according to claim 7, wherein the circular frame parts (28A3 ; 28A4) are made of a metallic material.

9. Bearing according to one of claims 5 to 8, wherein the elastomeric part (28A) is made of rubber.

10. Bearing according to one of claims 5 to 9, wherein the elastomeric part (28A) comprises a sealing lip extending from the vicinity of the ring (22) against which the swivelling ring (26) slides, and adapted to lay against a surface (201) of the second ring (20) amongst the inner and outer rings (20, 22) of the bearing (2).

11. Bearing according to one of claims 1 to 4, wherein the elastically deformable retaining element is a spiral spring (28B).

12. Bearing according to claim 11, wherein the spiral spring (28B) is made of a metallic material.

13. Bearing according to claim 11, wherein the spiral spring (28B) is made of a plastic material.

14. Bearing according to one of the previous claims, wherein the first ring is the outer ring (22) of the bearing (2).

15. A clutch release bearing unit (4) comprising a bearing (2) according to one of the previous claims.
